# EUROPEAN PATENT SPECIFICATION

(11) **EP 4 002 979 B1**
(45) Date of publication and mention of the grant of the patent: **23.04.2025**
(21) Application number: 20754553.4
(22) Date of filing: 27.07.2020
(51) Int. Cl.: A01B 49/02, A01B 76/00, A01B 63/111, A01B 71/08

(54) **SYSTEM FOR DETERMINING MATERIAL ACCUMULATION RELATIVE TO GROUND ENGAGING TOOLS OF AN AGRICULTURAL IMPLEMENT AND RELATED METHODS**
SYSTEM ZUR BESTIMMUNG VON MATERIALANSAMMLUNGEN BEI BODENBEARBEITUNGSWERKZEUGEN EINES LANDWIRTSCHAFTLICHEN GERÄTS UND ZUGEHÖRIGE VERFAHREN
SYSTÈME DE DÉTERMINATION DE L'ACCUMULATION DE MATIÈRE RELATIVE À DES OUTILS DE MISE EN PRISE AVEC LE SOL D'UN ÉQUIPEMENT AGRICOLE ET PROCÉDÉS ASSOCIÉS

(30) Priority: 29.07.2019 US 201916524788
(43) Date of publication of application: 01.06.2022
(73) Proprietor: CNH Industrial Belgium nv, 8210 Zedelgem (BE)
(72) Inventor: SMITH, Kevin M., New Holland, Pennsylvania 17557 (US); HARMON, Joshua David, New Holland, Pennsylvania 17557 (US)
(74) Representative: CNH Industrial IP Department
(86) International application number: PCT/US2020/043661
(87) International publication number: WO 2021/021695

(56) References cited:
- EP-A1- 3 403 478
- DE-A1- 102017 112 224
- KR-U- 20090 012 154
- US-A1- 2015 296 701
- US-A1- 2018 352 718

## Description

### FIELD OF THE INVENTION

The present disclosure relates to systems for determining material accumulation relative to ground engaging tools of an agricultural implement and related methods.

### BACKGROUND OF THE INVENTION

It is well known that, to attain the best agricultural performance from a field, a farmer must cultivate the soil, typically through a tillage operation. Modern farmers perform tillage operations by pulling a tillage implement behind an agricultural work vehicle, such as a tractor. Tillage implements typically include one or more ground engaging tools configured to engage the soil as the implement is moved across the field. For example, in certain configurations, the implement may include one or more harrow discs, leveling discs, rolling baskets, shanks, tines, and/or the like. Such ground engaging tool(s) loosen and/or otherwise agitate the soil to prepare the field for subsequent planting operations.

During tillage operations, field materials, such as residue, soil, rocks, and/or the like, may become trapped or otherwise accumulate between adjacent ground engaging tools. Such accumulations of field materials may inhibit the operation of the ground engaging tools in a manner that prevents the tools from providing adequate tillage to the field. In such instances, it is necessary for the operator to take certain corrective actions to remove the material accumulation. However, it may be difficult for the tillage implement operator to determine when material accumulation occurs between the ground engaging tools. The European patent application published as EP 3 403 478 A1 discloses an agricultural implement with a plurality of ground engaging tools pivotally coupled to a frame and a plurality of sensors. Each sensor is configured to detect a parameter indicative of a current position of one of the plurality of ground engaging tools in order to monitor a displacement of each ground engaging tool and determine a current global ground engaging tool displacement parameter for the implement based on the monitored displacements of the plurality of ground engaging tools. While these sensors may be capable of monitoring the vertical position of a ground engaging tool, they do not help the operator with determining when material accumulation occurs between the ground engaging tools.

Accordingly, an improved system for determining material accumulation relative to ground engaging tools of an agricultural implement and a related method would be welcomed in the technology.

### BRIEF DESCRIPTION OF THE INVENTION

Aspects and advantages of the invention will be set forth in part in the following description.

In one aspect, the present subject matter is directed to a system for determining material accumulation relative to ground engaging tools of an agricultural implement. The system includes a frame member extending along a first direction and first and second ground engaging tools coupled to the frame member and spaced apart from each other in the first direction such that an open space is defined between the first and second ground engaging tools. The first and second ground engaging tools are configured to engage soil within a field as the agricultural implement is moved across the field. The system further includes a sensing arm aligned with the open space defined between the first and second ground engaging tools, where the sensing arm is displaceable from a neutral position by material accumulation between the first and second ground engaging tools, wherein the sensing arm does not engage the ground when in the neutral position. The system also includes a sensor configured to detect a parameter indicative of displacement of the sensing arm. Additionally, the system includes a controller communicatively coupled to the sensor, where the controller is configured to monitor the parameter based at least in part on data received from the sensor to determine a presence of material accumulation between the first and second ground engaging tools.

In a further aspect, the present invention is directed to a method for managing material accumulation relative to ground engaging tools of an agricultural implement. The agricultural implement includes a frame member extending along a first direction and first and second ground engaging tools coupled to the frame member and configured to engage soil within a field as the agricultural implement is moved across the field. The first and second ground engaging tools are spaced apart from each other in the first direction such that an open space is defined between the first and second ground engaging tools. The method includes receiving, with a computing device, data from a sensor configured to detect a parameter indicative of displacement of a sensing arm, where the sensing arm is aligned with the open space defined between the first and second ground engaging tools, where the sensing arm is displaceable from a neutral position by material accumulation between the first and second ground engaging tools, wherein the sensing arm does not engage the ground when in the neutral position. The method further includes analyzing, with the computing device, the sensor data to determine the presence of material accumulation between the first and second ground engaging tools. Additionally, the method includes initiating, with the computing device, a control action based at least in part on the determination of material accumulation between the first and second ground engaging tools.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of an agricultural implement coupled to a work vehicle in accordance with aspects of the present subject matter;
FIG. 2 illustrates an alternative perspective view of an agricultural implement in accordance with aspects of the present subject matter, particularly illustrating various ground engaging assemblies of the implement;
FIG. 3 illustrates a front view of one embodiment of a ground engaging assembly of an agricultural implement in accordance with aspects of the present subject matter, particularly illustrating one embodiment of a sensing assembly suitable for use in determining material accumulation relative to the ground engaging assembly;
FIG. 4 illustrates a side view of the ground engaging assembly and sensing assembly shown in FIG. 3 in accordance with aspects of the present subject matter;
FIG. 5 illustrates another front view of the ground engaging assembly and sensing assembly shown in FIG. 3 in accordance with aspects of the present subject matter, particularly illustrating the presence of material accumulation relative to the ground engaging assembly;
FIG. 6 illustrates a side view of the ground engaging assembly and sensing assembly shown in FIG. 5, particularly illustrating one embodiment of a sensing arm of the sensing assembly in accordance with aspects of the present subject matter;
FIG. 7 illustrates another side view of the ground engaging assembly and sensing assembly shown in FIG. 5, particularly illustrating another embodiment of a sensing arm of the sensing assembly in accordance with aspects of the present subject matter;
FIG. 8 illustrates another front view of the ground engaging assembly shown in FIG. 3, particularly illustrating another embodiment of a sensing assembly suitable for use in determining material accumulation relative to the ground engaging assembly;
FIG. 9 illustrates a side view of the ground engaging assembly and sensing assembly shown in FIG. 8, particularly illustrating one embodiment of a sensing arm of the sensing assembly in accordance with aspects of the present subject matter;
FIG. 10 A illustrates a front view of another embodiment of a ground engaging assembly of an agricultural implement in accordance with aspects of the present subject matter, particularly illustrating one embodiment of a sensing assembly suitable for use in determining material accumulation relative to the ground engaging assembly;
FIG. 10B illustrates a front view of yet another embodiment of a ground engaging assembly of an agricultural implement in accordance with aspects of the present subject matter, particularly illustrating one embodiment of a sensing assembly suitable for use in determining material accumulation relative to the ground engaging assembly;
FIG. 11 illustrates a schematic view of a system for determining material accumulation relative to ground engaging tools of a ground engaging assembly of an agricultural implement in accordance with aspects of the present subject matter; and
FIG. 12 illustrates a method for managing material accumulation relative to ground engaging tools of a ground engaging assembly of an agricultural implement in accordance with aspects of the present subject matter.

Repeat use of reference characters in the present specification and drawings is intended to represent the same or analogous features or elements of the present technology.

### DETAILED DESCRIPTION OF THE INVENTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the claims. For instance, features illustrated or described as part of one embodiment can be used with another embodiment to yield a still further embodiment. Thus, it is intended that the present invention covers such modifications and variations as come within the scope of the appended claims.

In general, the present invention is directed to systems and methods for determining material accumulation relative to adjacent ground engaging tools of an agricultural implement. Specifically, in several embodiments, a controller of the disclosed system is configured to receive data from one or more sensors as the implement is being moved across a field. The sensor(s) are associated with a sensing arm positioned relative to (e.g., between) a pair of adjacent ground engaging tools (e.g., discs, shanks, etc.). The sensing arm is displaceable by material accumulation formed between the adjacent ground engaging tools, with the associated sensor(s) being configured to detect a parameter(s) indicative of the displacement of the sensing arm. Such detectable parameter(s) in turn, is monitored to determine or estimate the presence of material accumulation between the adjacent ground engaging tools. For example, when the actual displacement of the sensing arm(s) is being monitored, the magnitude of the displacement, the frequency at which the sensing arm(s) is being displaced, and/or the period of time across which the sensing arm(s) is displaced may be analyzed to determine the presence of material accumulation and/or severity of material accumulation between the adjacent ground engaging tools.

Thereafter, in the event that material accumulation is determined based at least in part on the data received from the sensor(s), the controller is configured to initiate one or more control actions. Such control action(s) may generally be associated with de-plugging or otherwise removing the field materials trapped or accumulated between the ground engaging tools. For example, in one embodiment, the control action(s) may include adjusting one or more operating parameters of the implement, such as the orientation and/or the penetration depth of the ground engaging tools, and/or the like. In some embodiments, the control action(s) may include adjusting a down force applied to the sensing arm. Further, in some embodiments, the control action(s) may include notifying an operator of the material accumulation. Additionally or alternatively, in some embodiments, the control action(s) may include adjusting an operation of one or more vehicle drive components of the vehicle towing the implement, to slow down or stop the implement 10, for example.

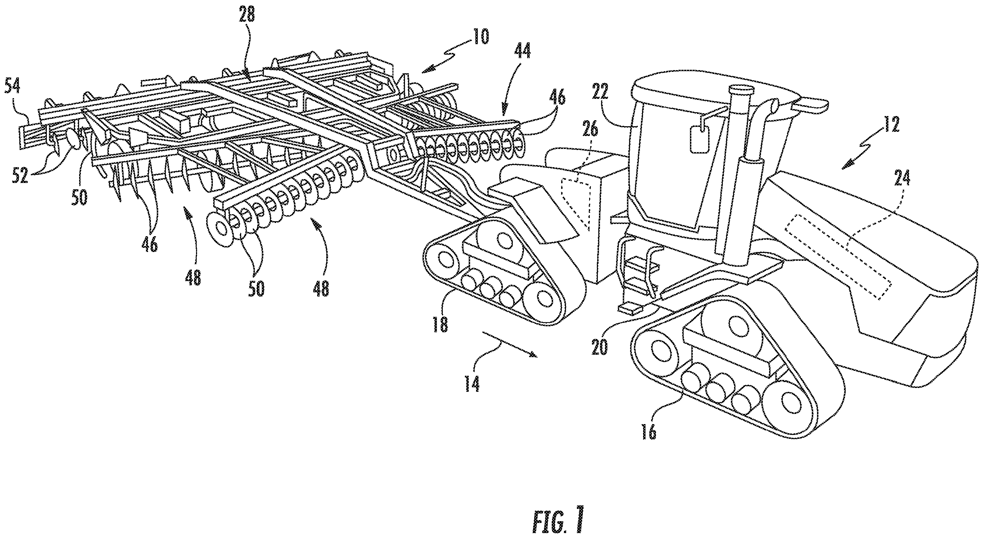

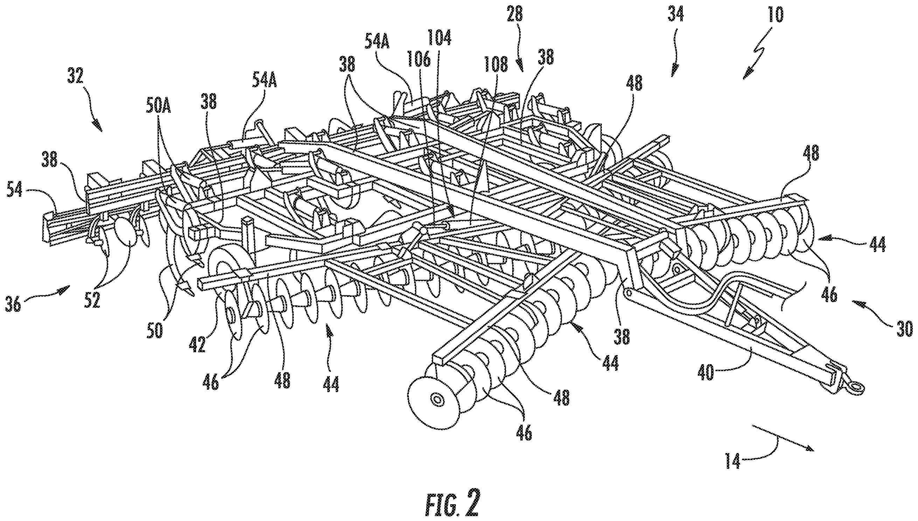

Referring now to the drawings, FIGS. 1 and 2 illustrate differing perspective views of one embodiment of an agricultural implement 10 in accordance with aspects of the present invention. Specifically, FIG. 1 illustrates a perspective view of the agricultural implement 10 coupled to a work vehicle 12. Additionally, FIG. 2 illustrates a perspective view of the implement 10, particularly illustrating various components of the implement 10.

In general, the implement 10 may be configured to be towed across a field in a direction of travel (e.g., as indicated by arrow 14 in FIG. 1) by the work vehicle 12. As shown, the implement 10 may be configured as a tillage implement, and the work vehicle 12 may be configured as an agricultural tractor. However, in other embodiments, the implement 10 may be configured as any other suitable type of implement, such as a seed-planting implement, a fertilizer-dispensing implement, and/or the like. Similarly, the work vehicle 12 may be configured as any other suitable type of vehicle, such as an agricultural harvester, a self-propelled sprayer, and/or the like.

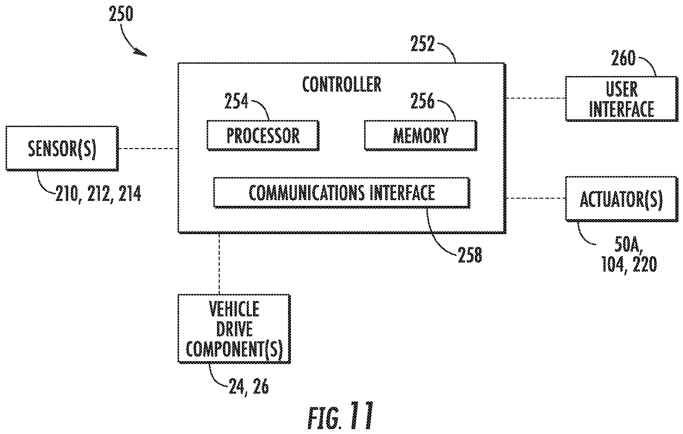

As shown in FIG. 1, the work vehicle 12 may include a pair of front track assemblies 16 (only one of which is shown), a pair of rear track assemblies 18 (only one of which is shown), and a frame or chassis 20 coupled to and supported by the track assemblies 16, 18. An operator's cab 22 may be supported by a portion of the chassis 20 and may house various input devices (e.g., a user interface 260 shown in FIG. 11) for permitting an operator to control the operation of one or more components of the work vehicle 12 and/or one or more components of the implement 10. Additionally, the work vehicle 12 may include an engine 24 and a transmission 26 mounted on the chassis 20. The transmission 26 may be operably coupled to the engine 24 and may provide variably adjusted gear ratios for transferring engine power to the track assemblies 16, 18 via a drive axle assembly (not shown) (or via axles if multiple drive axles are employed).

As shown in FIGS. 1 and 2, the implement 10 includes a frame 28. More specifically, the frame 28 may extend longitudinally between a forward end 30 and an aft end 32. The frame 28 may also extend laterally between a first side 34 and a second side 36. In this respect, the frame 28 generally includes a plurality of structural frame members 38, such as beams, bars, and/or the like, configured to support or couple to a plurality of components. Furthermore, a hitch assembly 40 may be connected to the frame 28 and configured to couple the implement 10 to the work vehicle 12. Additionally, a plurality of wheels 42 (one is shown) may be coupled to the frame 28 to facilitate towing the implement 10 in the direction of travel 14.

In several embodiments, the frame 28 may be configured to support one or more gangs or sets 44 of disc blades 46. Each disc blade 46 may, in turn, be configured to penetrate into or otherwise engage the soil as the implement 10 is being pulled through the field. In this regard, the various disc gangs 44 may be oriented at an angle relative to the direction of travel 14 to promote more effective tilling of the soil. In the embodiment shown in FIGS. 1 and 2, the implement 10 includes four disc gangs 44 supported on the frame 28 adjacent to its forward end 30. However, it should be appreciated that, in alternative embodiments, the implement 10 may include any other suitable number of disc gangs 44, such as more or fewer than four disc gangs 44. Furthermore, in one embodiment, the disc gangs 44 may be mounted to the frame 28 at any other suitable location, such as adjacent to its aft end 32.

Moreover, in several embodiments, the implement 10 may include a plurality of disc gang actuators 104 (FIG. 2), with each actuator 104 being configured to move or otherwise adjust the orientation or position of one of the disc gangs 44 relative to the implement frame 28. For example, as shown in the illustrated embodiment, a first end of each actuator 104 (e.g., a rod 106 of the actuator 104) may be coupled to a support arm 48 of the corresponding disc gang 44, while a second end of each actuator 104 (e.g., the cylinder 108 of the actuator 104) may be coupled to the frame 28. The rod 106 of each actuator 104 may be configured to extend and/or retract relative to the corresponding cylinder 108 to adjust the angle of the corresponding disc gang 44 relative to a lateral centerline (not shown) of the frame 28 and/or the penetration depth of the associated disc blades 46. In the illustrated embodiment, each actuator 104 corresponds to a fluid-driven actuator, such as a hydraulic or pneumatic cylinder. However, it should be appreciated that each actuator 104 may correspond to any other suitable type of actuator, such as an electric linear actuator.

Additionally, as shown, in one embodiment, the implement frame 28 may be configured to support other ground engaging tools. For instance, in the illustrated embodiment, the frame 28 is configured to support a plurality of shanks 50 or tines (not shown) configured to rip or otherwise till the soil as the implement 10 is towed across the field. Furthermore, in the illustrated embodiment, the frame 28 is also configured to support a plurality of leveling blades 52 and rolling (or crumbler) basket assemblies 54. The implement 10 may further include shank frame actuator(s) 50A and/or basket assembly actuator(s) 54A configured to move or otherwise adjust the orientation or position of the shanks 50 and the basket assemblies 54, respectively, relative to the implement frame 28. It should be appreciated that, in other embodiments, any other suitable ground-engaging tools may be coupled to and supported by the implement frame 28, such as a plurality closing discs.

It should be appreciated that the configuration of the implement 10 and work vehicle 12 described above are provided only to place the present invention in an exemplary field of use. Thus, it should be appreciated that the invention may be readily adaptable to any manner of implement or work vehicle configurations.

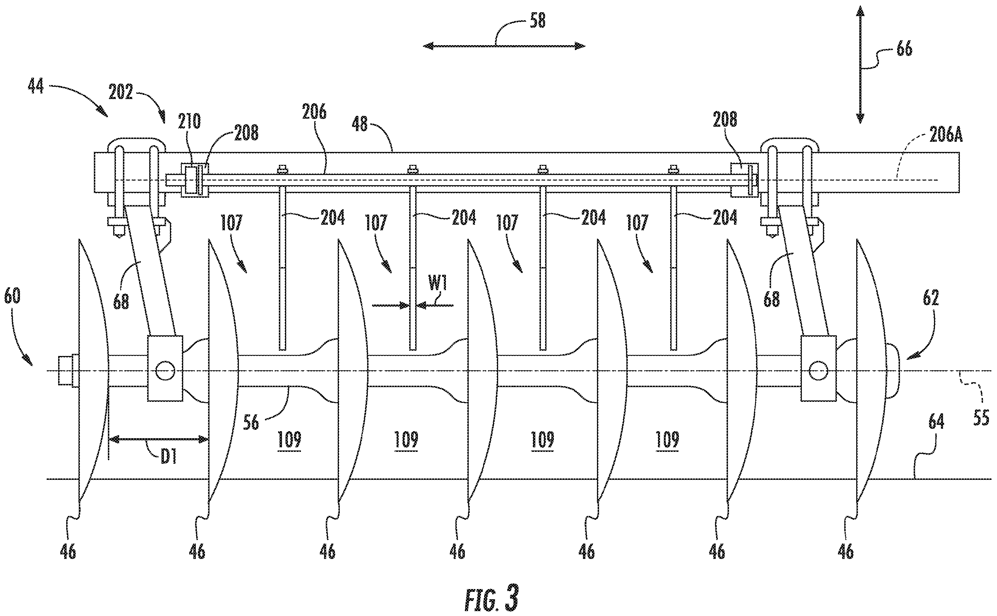

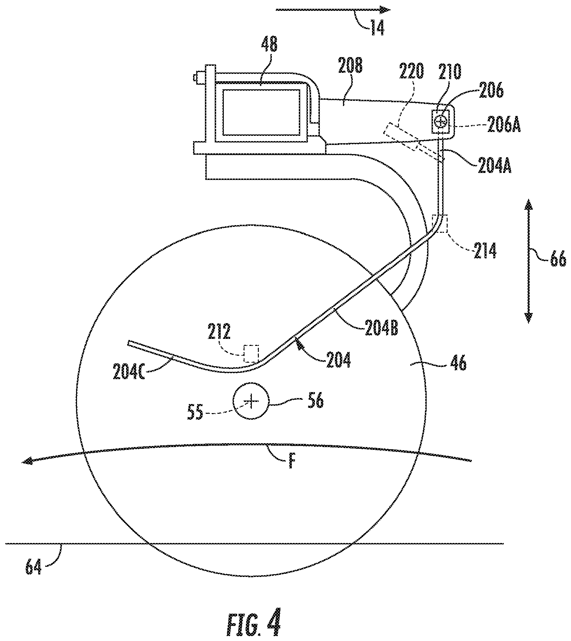

Referring now to FIGS. 3 and 4, exemplary views of a ground engaging assembly (e.g., one of the disc gangs 44 shown in FIGS. 1 and 2) are illustrated in accordance with aspects of the present invention. More particularly, FIG. 3 illustrates a front view of one of the disc gangs 44 described above with reference to FIGS. 1 and 2 having components of a sensing assembly installed relative thereto. Additionally, FIG. 4 illustrates a side view of the disc gang 44 and the components of the sensing assembly shown in FIG. 3.

As shown in FIG. 3, the disc gang 44 may include a disc gang shaft 56 that extends along an axial direction of the disc gang 44 (e.g., as indicated by arrow 58) between a first end 60 and a second end 62. The disc gang shaft 56 may be positioned below the support arm 48 of the disc gang 44 along a vertical direction (e.g., as indicated by arrow 66) of the implement 10 and supported relative to the support arm 48 by one or more hangers 68. However, in alternative embodiments, the disc gang shaft 56 may have any other suitable orientation. The disc blades 46 may be rotatably coupled to the disc gang shaft 56 and spaced apart from each other in the axial direction 58 by a distance D1. An open space 107 is thus defined between each pair of adjacent disc blades 46 in the axial direction 58. The disc gang shaft 56 also defines a rotational axis (e.g., as indicated by dashed line 55) about which the disc blades 46 rotate.

As the implement 10 is moved across a field, the disc blades 46 may be configured to penetrate the soil surface (e.g., as indicated by line 64) of the field and rotate about the rotational axis relative to the soil within the field such that field materials flow through the open spaces 107. It should be appreciated that during normal, non-plugged operation of the disc gang 44, substantially all of the field materials being processed by the disc gang 44 flow through the open spaces 107, particularly through portion(s) of open spaces 107 defined below the rotational axis 55 (i.e., through lower flow zone(s) 109), with only an occasional piece of residue, dirt clod, rock, and/or the like flowing above the disc gang shaft 56. For example, as shown in FIG. 4, field materials F flow below the rotational axis 55, within the flow zone 109, during normal operation of the disc gang 44.

In certain instances, however, a plugging condition may occur in which field materials may accumulate within the flow zone(s) 109 such that additional field materials flow above the rotational axis 55, such as above the disc gang shaft 56. For example, when the soil in the field has high moisture content, the soil may stick or adhere to the disc blades 46 such that the soil accumulates within the associated flow zone(s) 109. Moreover, a large chunk of residue or a rock may become lodged between a pair of adjacent disc blades 46 in a manner that inhibits the flow of field materials through the associated flow zone(s) 109, thereby causing additional field materials to accumulate therein. When the material accumulation between a pair of adjacent disc blades 46 is sufficient to inhibit the flow of further field materials through the associated flow zone 109, such field materials may begin to flow above the rotational axis 55 and the disc gang shaft 56.

In accordance with aspects of the present invention, a sensing assembly 202 may be associated with the disc gang 44 for detecting changes in material flow through the open spaces 107, which may be indicative of material accumulation within the flow zones 109. In several embodiments, the sensing assembly 202 may include one or more sensing arms 204 supported relative to the support arm 48 of the disc gang 44 by a shaft 206. As shown in FIG. 3, the sensing arms 204 is spaced apart in the axial direction 58 such that each sensing arm 204 is aligned with one of the open spaces 107. In the embodiment shown, the sensing arms 204 are thin members, each defining a width W1 extending in the axial direction 58 of the disc gang 44. In some embodiments, the width W1 of the sensing arms 204 may be less than 50% of the distance D1 between adjacent disc blades 46. The sensing arms 204 may be positioned entirely above the rotational axis 55 of the disc gang 44 and, in some embodiments, entirely above the disc gang shaft 56 to detect material flow through the open spaces 107 between adjacent disc blades 46 and above the rotational axis 55. It should be appreciated that, while only one sensing arm 204 is shown as being positioned between each respective pair of adjacent disc blades 46, any suitable number of sensing arms 204 may instead be positioned between adjacent pairs of blade discs 46 for detecting material flow above the rotational axis 55. For instance, two or more sensing arms 204 may be positioned between each adjacent pair of blade discs 46

As shown in FIG. 4, the shaft 206 is coupled to the support arm 48 by brackets 208 extending outwardly from a forward facing side of the support arm 48 along the direction of travel 14. The sensing arms 204 generally extend rearwardly from the shaft 206 towards the rotational axis 55 of the disc gang 44. Particularly, in the embodiment shown, the sensing arm 204 is bent such that the sensing arm 204 includes a first portion 204A, a second portion 204B, and a third portion 204C. Particularly, in a neutral position of the sensing arm 204 as shown in FIG. 4, when there is no material flow over the rotational axis 55 of the disc gang 44, the first portion 204A extends downwardly from the shaft 206 along the vertical direction 66, the second portion 204B extends downwardly along the vertical direction 66 and rearwardly along the direction of travel 14 from the first portion 204A, and the third portion 204C extends upwardly along the vertical direction 66 and rearwardly along the direction of travel 14 from the second portion 204B. In some embodiments, the second portion 204B of the sensing arm 204 is positioned directly vertically above the rotational axis 55 of the disc gang 44. However, it should be appreciated that the bracket(s) 208 may be otherwise positioned relative to the support arm 48 and/or that the sensing arm 204 may be otherwise oriented or shaped such that another portion of the sensing arm 204, or an entirety of the sensing arm 204, may extend vertically above the rotational axis 55 of the disc gang 44 in the neutral position.

In the illustrated embodiment, the shaft 206 is rotatably coupled to the brackets 208 such that the shaft 206 and the connected sensing arm(s) 204 are rotatable about a rotational axis 206A of the shaft 206, away from the neutral position, when material flow above the rotational axis 55 of the disc gang 44 occurs. The sensing arms 204 shown in FIG. 3 are ganged together by the shaft 206 such that rotation of one sensing arm 204 causes the same rotation of the other sensing arms 204. However, it should be appreciated that the sensing arms 204 may instead be independently mounted to the shaft 206 or independently mounted to the adjacent support arm 48 (e.g., by respective, separate brackets 208, shafts 206, and/or the like), such that rotation of one sensing arm 204 does not cause rotation of the other sensing arms 204.

The sensing assembly 202 may also include one or more sensors configured to detect one or more parameters indicative of displacement of the sensing arm(s) 204 from the neutral position. For example, in some embodiments, the sensing assembly 202 may include one or more rotational sensors 210, accelerometers 212, load sensors 214, or a combination thereof. The rotational sensor(s) 210 may be used to detect an angular position of the sensing arm(s) 204. Further, the accelerometer(s) 212 may be used to detect the acceleration or movement of the sensing arm(s) 204 (e.g., as the sensing arm(s) 204 rotates round the rotational axis 206A or is otherwise displaced). Additionally, the load sensor(s) 214 may be used to detect load(s) (e.g., stress or strain) on the sensing arm 204, e.g., at a position where the sensing arm 204 bends or flexes.

In general, such displacement-related parameters (e.g., the angular movement or pivoting of the sensing arm(s) 204, the acceleration of the sensing arm(s), and/or loading on the sensing arm(s) 204) are indicative of or otherwise associated with material accumulation within the flow zones 109. Specifically, as indicated above, material accumulation within a given flow zone 109 typically results in the flow of field materials over the disc gang shaft 56 and into contact with the adjacent sensing arm 204, which, in turn, will result in displacement of the arm 204 (e.g., in the form of pivoting about the rotational axis 206A or bending/flexing). Thus, as the magnitude of the displacement of the sensing arm 204 increases, it may be inferred that the amount of material accumulation between the adjacent discs 46 has increased as further amounts of field materials are forced to flow over the disc gang shaft 56 and into contact with the sensing arm 204. Additionally, the frequency and/or the duration of such displacement may also be used to assess whether the detected displacement is indicative of actual plugging between the discs 46 or is simply due to random field material being thrown over the disc gang shaft 56 and into contact with the sensing arm 204.

As will be described in greater detail below, in some embodiments, the sensing assembly 202 may include one or more components configured to facilitating de-plugging or reducing the amount of material accumulation between the adjacent discs 46. For instance, as shown in FIG. 4, the sensing assembly 202 may include one or more sensing arm actuators 220 configured to move or otherwise adjust the orientation or position of the sensing arm(s) 204 relative to the rotational axis 55 of the disc gang 44 to reduce material accumulation between the discs 56, particularly above the disc gang shaft 56. In the illustrated embodiment, the sensing arm actuator 220 is configured as a linear actuator coupled between an adjacent sensing arm 204 and the support arm 48. In such embodiment, the sensing arm actuator 220 may be configured to rotate the sensing arm 204 back towards its neutral position following the determination of a plugging condition. As such, the sensing arm 204 may be used to help dislodge material accumulation formed above the disc gang shaft 56. Additionally or alternatively, in some embodiments, the sensing arm actuator 220 may be configured to rotate the sensing arm 204 further away from its neutral position following the determination of a plugging condition. As such, the sensing arm 204 may be moved out of the way of the material flow to encourage the flow of materials above the disc gang shaft 56 to help prevent material accumulation above the disc gang shaft 56. It should be appreciated that the sensing arm actuator 220 may be configured as any other suitable type of actuator, such as a rotary actuator, and may be connected between any other suitable elements of the sensing assembly 202 and the implement 10 such that the sensing arm 204 may be actuatable to reduce material accumulation.

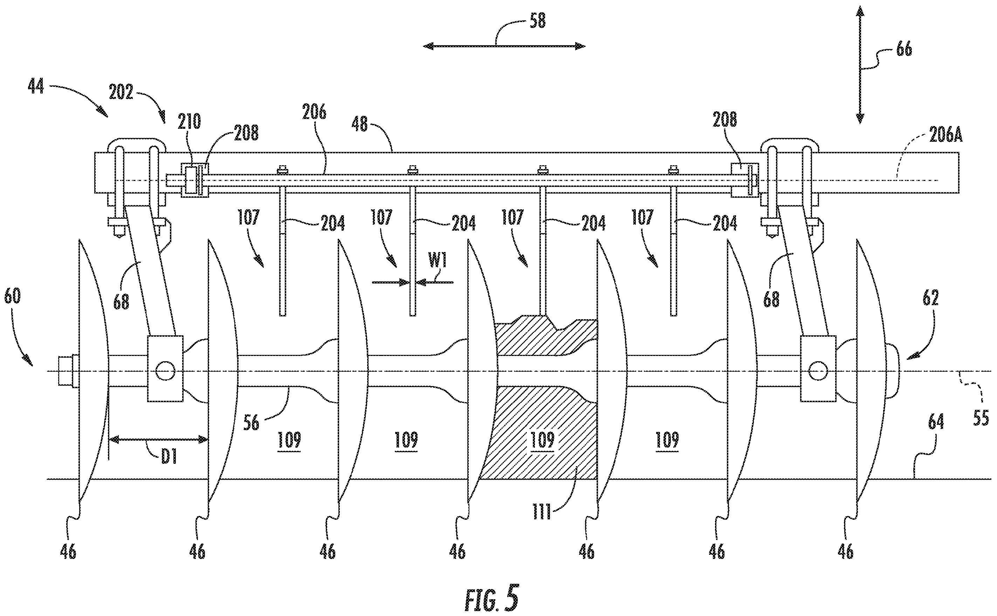

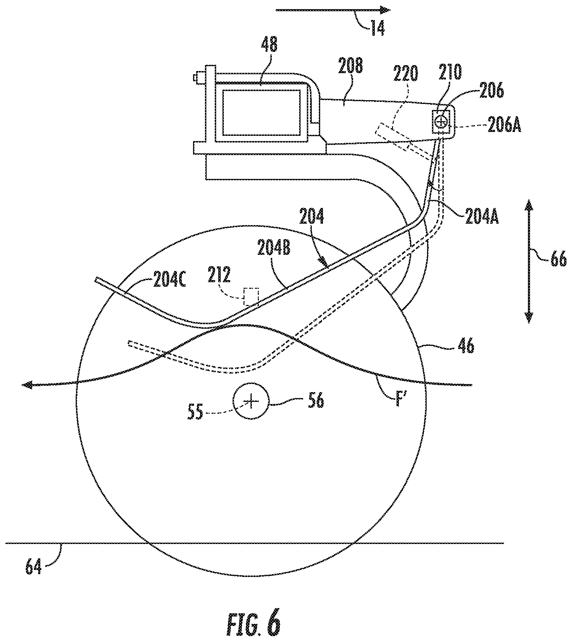

Referring now to FIGS. 5 and 6, exemplary views of a ground engaging assembly (e.g., the disc gang 44 shown in FIGS. 3 and 4) are illustrated in accordance with aspects of the present invention. More particularly, FIG. 5 illustrates a front view of the disc gang 44 and sensing assembly 202 described above with reference to FIGS. 3 and 4 while the disc gang 44 is experiencing a plugging condition within one of its flow zones 109. Additionally, FIG. 6 illustrates a side view of the disc gang 44 and the sensing assembly 202 shown in FIG. 5 during the plugging condition.

As described above, when a plugging condition occurs, field materials may accumulate within the flow zone(s) 109 such that additional field materials flow above the rotational axis 55 of the disc gang 44, such as above the disc gang shaft 56. As shown in FIG. 5, material accumulation 111 has built up within one of the flow zones 109 such that material flow F' (FIG. 6) flows over the rotational axis 55 and the disc gang shaft 56 of the disc gang 44. The material flow F' causes the associated sensing arm 204 and shaft 206 to rotate such that the sensing arm 204 moves away from its neutral position (shown in dashed lines) and away from the rotational axis 55 of the disc gang 44 towards a displaced position (shown in solid lines). In general, the sensing arm 204 rotates further with more material accumulation 111, such that the displaced position is further away from the neutral position with more material accumulation 111. In the embodiment shown, the sensing arm 204 is not configured to substantially flex or bend, but, rather, pivot or rotate about the rotational axis 206A of the shaft 206. In such an embodiment, suitable sensors, such as the rotation sensor 210 and/or the acceleration sensor 212, may be used to monitor the rotational displacement of the sensing arm 204 as field materials flow over the disc gang shaft 56.

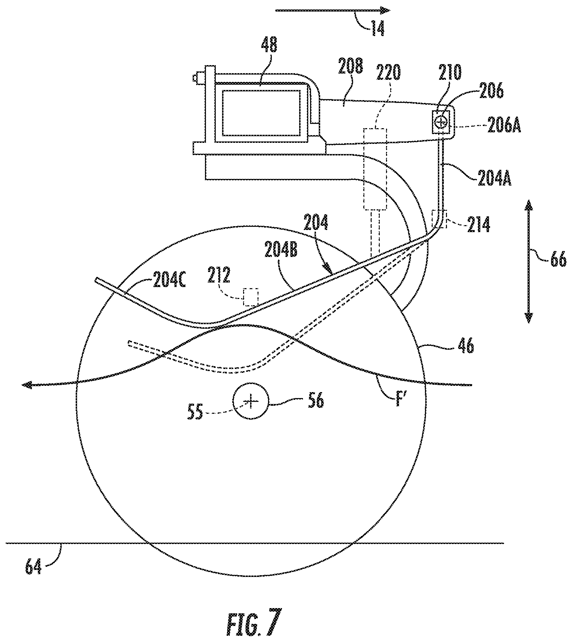

In an alternate embodiment, the associated sensing arm 204 may be configured to flex or bend with material flow F' above the rotational axis 55 and the disc gang shaft 56 of the disc gang 44. For example, FIG. 7 illustrates an exemplary view of a variation of the associated sensing arm 204 suitable for use with the sensing assembly 202 described above with reference to FIGS. 3-6. As shown in FIG. 7, a portion of the sensing arm 204 (e.g., the second portion 204B) may be configured to bend relative to another portion of the sensing arm 204 (e.g., the first portion 204A) away from its neutral position (shown in dashed lines) as field materials are directed over the disc gang shaft 46 towards a displaced position (shown in solid lines). In such an embodiment, a suitable sensor, such as the load sensor 214, may be installed on the sensing arm (e.g., at the transition between the first and second portions 204A, 204B of the sensing arm 204) to determine the load (e.g., stress, strain, etc.) on the sensing arm 204 during such bending or flexing. In general, the load on the sensing arm 204 may increase with additional amount of field materials flowing over the disc gang shaft 46. It should be appreciated that the sensing arm 204 may be configured to bend or flex at any location along the sensing arm 204, such that the load sensor(s) 214 may be positioned at any corresponding location on the sensing arm 204. Additionally, in some embodiments in which the sensing arm 204 is configured to bend or flex, the associated shaft 206 may be rotationally fixed such that the sensing arm 204 is not configured to rotate about the shaft axis 206A. In such embodiments, the load sensor 214 and/or the acceleration sensor 212 may be used to detect the displacement (e.g., bending/flexing) of the sensing arm 204 or a corresponding parameter indicative of the displacement of the sensing arm 204.

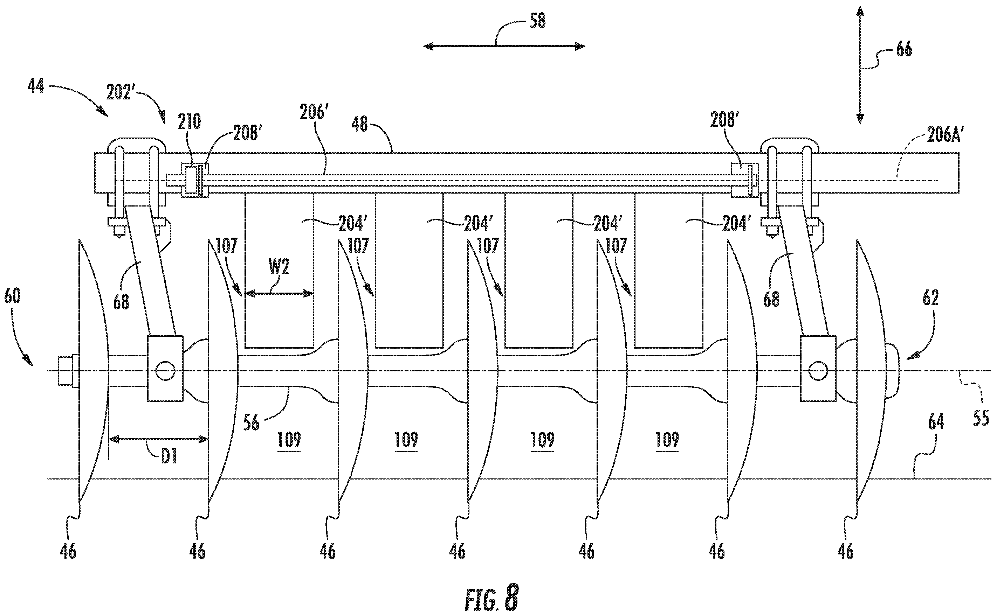

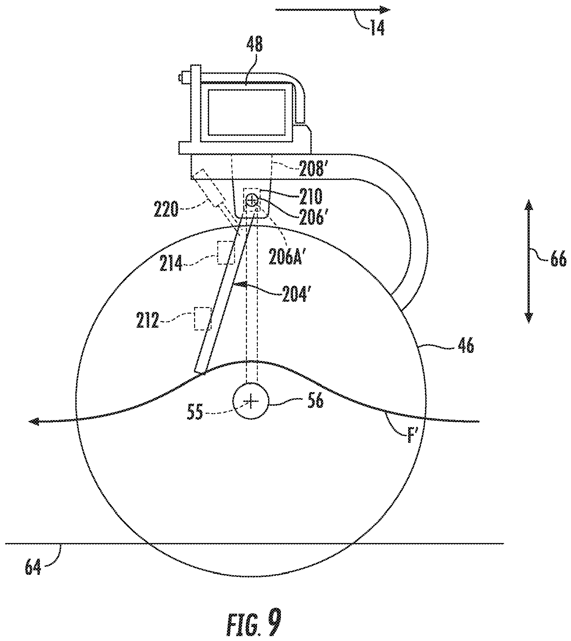

Referring now to FIGS. 8 and 9, exemplary views of another variation of a sensing assembly 202' suitable for use with the disc gang 44 described above with reference to FIGS. 3 and 4 are illustrated. More particularly, FIG. 8 illustrates a front view of the disc gang 44, with the alternate sensing assembly 202' being positioned relative thereto. Additionally, FIG. 9 illustrates a side view of the disc gang 44 and the components of the sensing assembly shown in FIG. 8.

Particularly, in the embodiment shown, the sensing assembly 202' is configured substantially similar to the sensing assembly 200 described above with reference to FIGS. 3-7, except for the sensing arms. More particularly, the sensing assembly 202' includes one or more sensing arm(s) 204', with each sensing arm 204' being disposed between a respective pair of adjacent disc blades 46. However, unlike the narrow, tine-like sensing arms 204 described above with reference to FIGS. 3-6, each sensing arm 204' is configured as a flap or paddle. Specifically, as shown in the illustrated embodiment, each sensing arm 204' is substantially oriented in the vertical direction 66 when at its neutral position (e.g., as shown in dashed lines in FIG. 9). Additionally, each sensing arm 204' defines a width W2 extending in the axial direction 58 of the disc gang 44. In some embodiments, the width W2 of the sensing arm 204' extends along at least 50% of the distance D1 defined between adjacent disc blades 46, as shown. However it may be appreciated that, in other embodiments, the width W2 of the sensing arm 204' may extend along less than 50% of the distance D1 between adjacent disc blades 46. It should also be appreciated that, while only one sensing arm 204' is shown as being positioned between each respective pair of adjacent disc blades 46, any suitable number of sensing arms 204' may, instead, be positioned between the adjacent blade discs 46. For instance, two or more sensing arms 204' may be positioned between each pair of adjacent blade discs 46.

In some embodiments, the sensing arm 204' may extend in the vertical direction 66 directly above the rotational axis 55 of the disc gang 44 when at its neutral position. For example, as shown in FIG. 9, the sensing arm 204' is coupled to a shaft 206' supported by brackets 208' extending downwardly from the support arm 48 along the vertical direction 66 such that the entirety of the sensing arm 204' extends directly vertically above the rotational axis 55 of the disc gang 44 when at its neutral position. Thus, the sensing arm 204' may be used to detect the flow of field materials above the rotational axis 55 of the disc gang 44 as material accumulates within the flow zones 109 between adjacent disc blades 46. It should be appreciated, however, that the sensing arm 204' may instead be disposed at any other suitable position/orientation that allows the sensing arm 204' to be used to determine material flow associated with the plugging condition. For instance, the sensing arm 204' may be positioned slightly in front of or slightly rearward of the rotational axis 55 of the disc gang in the direction of travel 14 or may be oriented at a non-vertical angle in its neutral position.

Similar to the sensing arm 204 described above with reference to FIGS. 3-7, the sensing arm 204' may be configured to be displaced from its neutral position by the flow or accumulation of field materials above the disc gang shaft 56. For instance, as shown in FIG. 9, in some embodiments, the sensing arm 204' may be rotatable with the shaft 206' about the shaft's rotational axis 206A'. In addition to such rotational displacement (or as an alternative thereto), the sensing arm 204' may be configured to be displaced via flexing or bending as field materials contact the arm 204, such as when the shaft 206' is rotationally fixed. Regardless, one or more suitable sensors, such as the rotational sensors 210, acceleration sensors 212, and/or the load sensors 214, may be used to detect the displacement of the sensing arm 204' (or a parameter indicative of the displacement of the arm 204', which may then be used to infer or estimate the occurrence of a plugged condition for the disc gang 44.

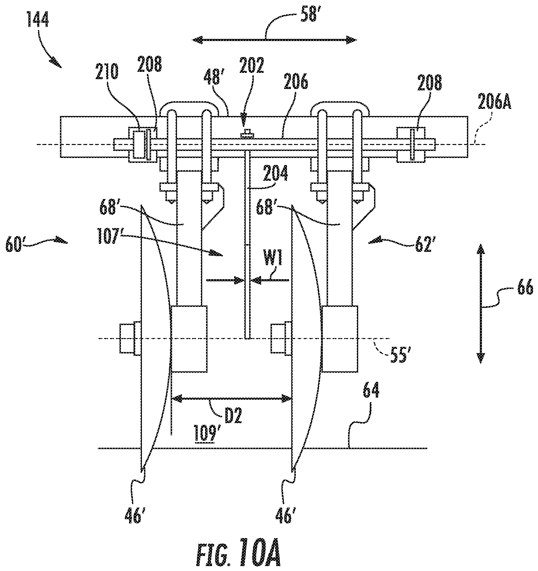

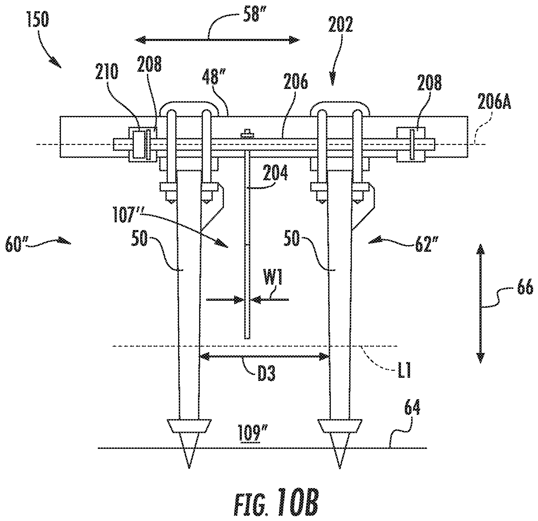

It should be appreciated that, while the sensing assembly 202, 202' has generally been described herein with reference to determining plugging between adjacent discs 46 of a disc gang 44 of a tillage implement 10, the sensing assembly 202, 202' may be configured to be associated with any other ground engaging tools or ground engaging assemblies of any suitable agricultural implement. For example, referring now to FIGS. 10A and 10B, alternative embodiments of ground engaging assemblies with which the disclosed sensing assembly 202 may be used are illustrated in accordance with aspects of the present invention. Particularly, FIG. 10A illustrates a disc assembly with which the sensing assembly 202 may be used. Additionally, FIG. 10B illustrates a shank assembly with which the sensing assembly 202 may be used.

As shown in FIG. 10A, the sensing assembly 202 may be suitable for use with a disc assembly 144, which is configured substantially similar to the disc gang 44 described above with reference to FIGS. 3-9, except that the disc blades 46' are individually mounted to a support arm 48' by respective hangers 68'. The support arm 48 extends along an axial direction of the disc assembly 144 (e.g., as indicated by arrow 58') between a first end 60' and a second end 62'. The disc blades 46' are spaced apart in the axial direction 58' of the disc assembly 144 by a distance D2 such that an open space 107' is defined between each adjacent pair of disc blades 46', the disc blades 46' being rotatable about a rotational axis 55' parallel to and extending along the axial direction 58'. A sensing assembly, such as the sensing assembly 202 described above, may be positioned relative to the disc assembly 144. Particularly, at least one sensing arm 204 of the sensing assembly 202 may be disposed within the open space 107' between the adjacent disc blades 56', such as at a location entirely above the rotational axis 55' of the disc assembly 144 in the vertical direction 66 of the implement 10 such that material accumulation within flow zone 109' between adjacent disc blades 46' may be inferred or determined based on the detection of field materials flowing above the rotational axis 55' of the disc assembly 144.

As shown in FIG. 10B, the sensing assembly 202 may similarly be suitable for use with a shank assembly 150. The shank assembly 150 includes a plurality of the shanks, such as the shanks 50 described above with reference to FIGS. 1 and 2, individually mounted to a shank support arm 48". The shank support arm 48'' generally extends along an axial direction of the shank assembly 150 (e.g., as indicated by arrow 58") between a first end 60" and a second end 62'', with the shanks 50 being spaced apart by a distance D3 in the axial direction 58" such that an open space 107'' is defined between each adjacent pair of shanks 50. A sensing assembly, such as the sensing assembly 202 described above, may similarly be positioned relative to the shank assembly 150. Particularly, at least one sensing arm 204 of the sensing assembly 202 may be disposed within the open space 107" between the adjacent shanks 50 and positioned entirely above a plugging line L1 of the shank assembly 150 in the vertical direction 66 of the implement 10. The plugging line L1 may generally correspond to a height above the ground surface 64 at or above which a plugging condition of the shank assembly 150 occurs. During normal, non-plugged operating conditions, substantially all of the field materials being processed by the shank assembly 150 flow through the open spaces 107", particularly through portion(s) of open spaces 107" below the plugging line L1 (i.e., through flow zone(s) 109"), with only an occasional piece of residue, dirt clod, rock, and/or the like flowing above the plugging line L1. However, during a plugged condition, material accumulates within the flow zone(s) 109'' such that field materials may begin to flow above the plugging line L1. As such, material accumulation within the flow zone 109'' between adjacent shanks 50 may be inferred or determined based on the detection of field materials flowing above the plugging line L1 of the shank assembly 150.

It should be appreciated that, while the disc assembly 144 and shank assembly 150 shown in FIGS. 10A and 10B are discussed herein with reference to the sensing assembly 202, any other suitable sensing assembly, such as the sensing assembly 202', may instead be configured to be used with such ground engaging assemblies 144, 150.

Referring now to FIG. 11, a schematic view of one embodiment of a system 250 for determining material accumulation relative to ground engaging tools of a ground engaging assembly of an agricultural implement is illustrated in accordance with aspects of the present invention. In general, the system 250 will be described herein with reference to the implement 10 described above with reference to FIGS. 1-2 and the sensing assemblies 202, 202' described with reference to FIGS. 3-10B. However, it should be appreciated by those of ordinary skill in the art that the disclosed system 250 may generally be utilized with agricultural implements having any other suitable implement configuration and/or with ground engaging assemblies having any other suitable assembly/tool configuration.

As shown in FIG. 11, the system 250 includes a controller 252 configured to electronically control the operation of one or more components of the agricultural implement 10. In general, the controller 252 may comprise any suitable processor-based device known in the art, such as a computing device or any suitable combination of computing devices. Thus, in several embodiments, the controller 252 may include one or more processor(s) 254, and associated memory device(s) 256 configured to perform a variety of computer-implemented functions. As used herein, the term "processor" refers not only to integrated circuits referred to in the art as being included in a computer, but also refers to a controller, a microcontroller, a microcomputer, a programmable logic circuit (PLC), an application specific integrated circuit, and other programmable circuits. Additionally, the memory device(s) 256 of the controller 252 may generally comprise memory element(s) including, but not limited to, a computer readable medium (e.g., random access memory RAM)), a computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 256 may generally be configured to store suitable computer-readable instructions that, when implemented by the processor(s) 254, configure the controller 252 to perform various computer-implemented functions, such as one or more aspects of the methods and algorithms that will be described herein. In addition, the controller 252 may also include various other suitable components, such as a communications circuit or module, one or more input/output channels, a data/control bus and/or the like.

It should be appreciated that, in several embodiments, the controller 252 may correspond to an existing controller of the agricultural implement 10 and/or of the work vehicle 12 to which the implement 10 is coupled. However, it should be appreciated that, in other embodiments, the controller 252 may instead correspond to a separate processing device. For instance, in one embodiment, the controller 252 may form all or part of a separate plug-in module that may be installed within the agricultural implement 10 to allow for the disclosed system and method to be implemented without requiring additional software to be uploaded onto existing control devices of the agricultural implement 10.

In some embodiments, the controller 252 may be configured to include a communications module or interface 258 to allow for the controller 252 to communicate with any of the various other system components described herein. For instance, as described above, the controller 252 may, in several embodiments, be configured to receive data inputs from one or more sensors of the agricultural implement 10 that are used to detect one or more parameters associated with material flow relative to the associated ground engaging assembly. Particularly, the controller 252 may be in communication with one or more displacement sensors configured to detect parameters associated with the displacement of the sensing arm(s) 204. For instance, the controller 252 may be communicatively coupled to one or more of the sensor(s) 210, 212, 214 via any suitable connection, such as a wired or wireless connection, to allow data indicative of displacement of the sensing arm(s) 204 to be transmitted from the sensor(s) 210, 212, 214 to the controller 252.

Specifically, referring back to FIGS. 3-10B, each sensing assembly 202, 202' may, for example, include or be associated with one or more rotation sensors 210, one or more acceleration sensors 212, and/or one or more load sensors 214 installed or otherwise positioned relative to one or more of the sensing arms 204 to capture data (e.g., rotational position data, acceleration data, load data) indicative of the displacement of the sensing arm(s) 204, which, in turn, is indicative of material accumulation relative to the adjacent ground engaging tools (e.g., disc blades 46, shanks 50, leveling blades 52, basket assemblies 54, etc.) of the implement 10. Thus, in several embodiments, the controller 252 is configured to determine the presence of material accumulation relative to the adjacent ground engaging tools based on the data received from the sensor(s) 210, 212, 214. For example, the controller 252 may include one or more suitable algorithms stored within its memory 256 that, when executed by the processor 254, allow the controller 252 to infer or estimate the presence of material accumulation relative to the adjacent ground engaging tools based on the data received from the sensor(s) 210, 212, 214.

For instance, the controller 252 may include one or more algorithms that compare the parameters indicative of displacement of the sensing arm 204 from the data received from the sensor(s) 210, 212, 214 to one or more thresholds associated with the presence of material accumulation. For example, the controller 252 may compare the parameters indicative of displacement of the sensing arm 204 to a magnitude threshold corresponding to a severity of the material flow above the material flow zone(s) 109, a frequency threshold or a period threshold corresponding to a persistence of the material flow above the material flow zone(s) 109, and/or the like. In one embodiment, the controller 252 may determine that there is material accumulation present within one or more of the flow zone(s) 109 when one or more of the monitored parameters crosses the associated threshold. For instance, when comparing magnitude(s), the controller 252 may determine the presence of material accumulation when material flow causes the sensing arm(s) 204 to displace by an amount that is greater than an associated displacement threshold, at an acceleration that is greater than an associated acceleration threshold, and/or due to a load that is greater than an associated load threshold. Similarly, the controller 252 may determine the presence of material accumulation when the detected arm displacement is more frequent than the frequency threshold or when the detected arm displacement occurs for periods longer than the period threshold. The controller 252 may further use a combination of such thresholds to further verify the presence of material accumulation.

The controller may further be configured to perform one or more implement-related control actions based on the data received from the sensor(s) 210, 212, 214. Specifically, the controller 252 may be configured to control one or more components of the agricultural implement 10 and/or the sensing assembly 202 based on the determination of the presence of material accumulation relative to adjacent ground engaging tools. For example, as shown in FIG. 11, the controller 252 may be configured to control the disc gang actuator(s) 104 associated with the disc gang 44. For instance, the controller 252 may be configured to control the down force on the disc gang 44 to adjust a penetration depth of the disc blades 46 of the disc gang 44 to help reduce the amount of material accumulation formed relative to the disc blades 46. The controller 252 may similarly be configured to control the shank frame actuator(s) 50A associated with the shanks 50 to adjust a penetration depth of the shanks 50 to reduce material accumulation formed between adjacent shanks 50.

The controller 252 may additionally or alternatively be configured to control the sensing arm actuator(s) 220 associated with the sensing arm(s) 204 of the sensing assembly 202. For instance, the controller 252 may be configured to actuate the sensing arm actuator(s) 220 to control the position of the sensing arm(s) 204 to help reduce the amount of material accumulation formed relative to the adjacent ground engaging tools. As such, the operating position of the ground engaging tools may not need to be adjusted from their working positions to reduce the amount of material accumulation.

Further, in some embodiments, the controller 252 may be configured to indicate to an operator the presence of material accumulation and/or one or more parameters associated with the material accumulation determined relative to the ground engaging tools. For example, in the embodiment shown in FIG. 11, the communications module 258 may allow the controller 252 to communicate with a user interface 260 having a display device configured to display information regarding the presence of material accumulation (e.g., amount, frequency, duration, patterns, and/or the like) determined relative to the ground engaging tools. However, it should be appreciated that the controller 252 may instead be communicatively coupled to any number of other indicators, such as lights, alarms, and/or the like to provide an indicator to the operator regarding the presence of material accumulation relative to pairs of ground engaging tools.

Additionally or alternatively, in some embodiments, the controller 252 may be configured to perform one or more vehicle-related control actions based on the determination of material accumulation relative to the ground engaging tools. For example, as shown in FIG. 11, in some embodiments, the controller 252 may be configured to control the operation of one or more vehicle drive components configured to drive the vehicle 12 coupled to the implement 10, such as the engine 24 and/or the transmission 26 of the vehicle 12. In such embodiments, the controller 252 may be configured to control the operation of the vehicle drive component(s) 24, 26 based on the determination of the material accumulation, for example, to slow down the vehicle and implement 10 or bring the vehicle and implement 10 to a stop when it is determined that the material accumulation is excessive.

It should be appreciated that, depending on the type of controller 252 being used, the above-described control actions may be executed directly by the controller 252 or indirectly via communications with a separate controller. For instance, when the controller 252 corresponds to an implement controller of the implement 10, the controller 252 may be configured to execute the implement-related control actions directly while being configured to execute the vehicle-related control actions by transmitting suitable instructions or requests to a vehicle-based controller of the vehicle 12 towing the implement 10 (e.g., using an ISObus communications protocol). Similarly, when the controller 252 corresponds to a vehicle controller of the vehicle towing the implement 10, the controller 252 may be configured to execute the vehicle-related control actions directly while being configured to execute the implement-related control actions by transmitting suitable instructions or requests to an implement-based controller of the implement 10 (e.g., using an ISObus communications protocol). In other embodiments, the controller 252 may be configured to execute both the implement-based control actions and the vehicle-based control actions directly or the controller 252 may be configured to execute both of such control action types indirectly via communications with a separate controller.

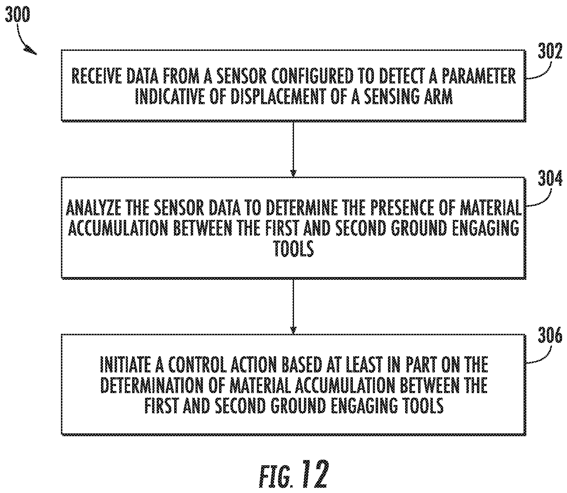

Referring now to FIG. 12, a flow diagram of one embodiment of a method 300 for managing material accumulation relative to ground engaging tools of an agricultural implement is illustrated in accordance with aspects of the present subject matter. In general, the method 300 will be described herein with reference to the implement 10 and the work vehicle 12 shown in FIGS. 1 and 2, the sensing assembly 202, 202' shown in FIGS. 3-10B as well as the various system components shown in FIG. 11. However, it should be appreciated that the disclosed method 300 may be implemented with work vehicles and/or implements having any other suitable configurations and/or within systems having any other suitable system configuration. In addition, although FIG. 12 depicts steps performed in a particular order for purposes of illustration and discussion, the methods discussed herein are not limited to any particular order or arrangement. One skilled in the art, using the disclosures provided herein, will appreciate that various steps of the method disclosed herein can be omitted, rearranged, combined, and/or adapted in various ways without deviating from the scope of the present disclosure.

As shown in FIG. 12, at (302), the method 300 includes receiving data from a sensor configured to detect a parameter indicative of displacement of a sensing arm aligned with an open space defined between adjacent ground engaging tools of an agricultural implement. For instance, as described above, the controller 252 is configured to receive an input(s) from one or more sensors configured to provide an indication of displacement of an associated sensing arm(s) 204, 204' of the disclosed sensor assembly positioned within an open space 107, 107', 107" between adjacent ground engaging tools (e.g., disc blades 46, 46', shanks 50, etc.), such as by receiving sensor data from one or more rotation sensors 210, one or more acceleration sensors 212, and/or one or more load sensors 214 provided in operative association with the sensor assembly.

Further, as shown at (304), the method 300 includes analyzing the sensor data to determine the presence of material accumulation between the first and second ground engaging tools. For instance, as described above, the controller 252 is configured to analyze the sensor data associated with the monitored displacement-related parameter to infer or estimate the presence of material accumulation between adjacent ground engaging tools. In one embodiment, the controller 252 may be configured to compare the monitored displacement-related parameters to one or more predetermined thresholds. For example, the controller 252 may determine the presence of material accumulation when the magnitude associated with the displacement of the sensing arm 204, 204' exceeds a magnitude threshold, when the frequency of the displacement of the sensing arm 204, 204' exceeds a frequency threshold, and/or when the duration of the displacement of the sensing arm 204, 204' exceeds a period threshold.

Additionally, as shown at (306), the method 300 includes initiating a control action based at least in part on the determination of material accumulation between the first and second ground engaging tools. For instance, as described above, the controller 252 may be configured to control the operation of one or more implement actuators, such as actuator(s) 50A, 104 and/or the operation of the sensing arm actuator 220, to reduce the amount of material accumulation between the first and second ground engaging tools.

It is to be understood that, in several embodiments, the steps of the method 300 are performed by the controller 252 upon loading and executing software code or instructions which are tangibly stored on a tangible computer readable medium, such as on a magnetic medium, e.g., a computer hard drive, an optical medium, e.g., an optical disc, solid-state memory, e.g., flash memory, or other storage media known in the art. Thus, in several embodiments, any of the functionality performed by the controller 252 described herein, such as the method 300, are implemented in software code or instructions which are tangibly stored on a tangible computer readable medium. The controller 252 loads the software code or instructions via a direct interface with the computer readable medium or via a wired and/or wireless network. Upon loading and executing such software code or instructions by the controller 252, the controller 252 may perform any of the functionality of the controller 252 described herein, including any steps of the method 300 described herein.

The term "software code" or "code" used herein refers to any instructions or set of instructions that influence the operation of a computer or controller. They may exist in a computer-executable form, such as machine code, which is the set of instructions and data directly executed by a computer's central processing unit or by a controller, a human-understandable form, such as source code, which may be compiled in order to be executed by a computer's central processing unit or by a controller, or an intermediate form, such as object code, which is produced by a compiler. As used herein, the term "software code" or "code" also includes any human-understandable computer instructions or set of instructions, e.g., a script, that may be executed on the fly with the aid of an interpreter executed by a computer's central processing unit or by a controller.

This written description uses examples to disclose the invention, including the best mode, and also to enable any person skilled in the art to practice the invention. The scope of the invention is defined by the claims.

## Claims

1. A system (250) for determining material accumulation relative to ground engaging tools (46) of an agricultural implement (10), the system (250) comprising a frame member (48) extending along a first direction (58) and first and second ground engaging tools (46) coupled to the frame member (48) and spaced apart from each other in the first direction (58) such that an open space (107) is defined between the first and second ground engaging tools (46), the first and second ground engaging tools (46) being configured to engage soil within a field as the agricultural implement (10) is moved across the field, the system (250) being **characterized by**:
a sensing arm (204) aligned with the open space (107) defined between the first and second ground engaging tools (46), the sensing arm (204) being displaceable from a neutral position by material accumulation between the first and second ground engaging tools, wherein the sensing arm (204) does not engage the ground when in the neutral position;
a sensor (210, 212, 214) configured to detect a parameter indicative of displacement of the sensing arm (204); and
a controller (252) communicatively coupled to the sensor (210, 212, 214), the controller (252) configured to monitor the parameter based at least in part on data received from the sensor (210, 212, 214) to determine a presence of material accumulation between the first and second ground engaging tools (46).

2. The system (250) of claim 1, wherein the controller (252) is configured to determine the presence of material accumulation by comparing the parameter to at least one threshold associated with the presence of material accumulation.

3. The system (250) of claim 1, wherein the controller (252) is further configured to initiate a control action based at least in part on the determination of the presence of material accumulation.

4. The system (250) of claim 3, wherein the control action comprises adjusting a downforce applied to the first and second ground engaging tools (46) or adjusting a speed of the agricultural implement (10).

5. The system (250) of claim 3, wherein the control action comprises actuating the sensing arm (204).

6. The system (250) of claim 3, wherein the control action comprises notifying an operator of the agricultural implement (10) of the material accumulation (111) between the first and second ground engaging tools (46).

7. The system (250) of claim 1, wherein the sensor is configured as one of an accelerometer (212), a rotation sensor (210), or a load sensor (214).

8. The system (250) of claim 1, wherein the sensor (210, 212) is configured to detect pivoting of the sensing arm (204).

9. The system (250) of claim 1, wherein the sensor (212, 214) is configured to detect flexing of the sensing arm.

10. The system (250) of claim 1, wherein each of the first and second ground engaging tools (46) comprise first and second discs, respectively.

11. The system (250) of claim 1, wherein each of the first and second ground engaging tools (50) comprise first and second shanks, respectively.

12. A method (300) for managing material accumulation relative to ground engaging tools (46) of an agricultural implement (10), the agricultural implement (10) comprising a frame member (48) extending along a first direction (58), first and second ground engaging tools (46) coupled to the frame member (48) and configured to engage soil within a field as the agricultural implement (10) is moved across the field, the first and second ground engaging tools (46) being spaced apart from each other in the first direction (58) such that an open space (107) is defined between the first and second ground engaging tools (46), the method (300) comprising:
receiving, with a computing device (252), data from a sensor (210, 212, 214) configured to detect a parameter indicative of displacement of a sensing arm (204) aligned with the open space (107) defined between the first and second ground engaging tools (46), the sensing arm (204) being displaceable from a neutral position by material accumulation between the first and second ground engaging tools, wherein the sensing arm (204) does not engage the ground when in the neutral position;
analyzing, with the computing device (252), the sensor data to determine the presence of material accumulation between the first and second ground engaging tools (46); and
initiating, with the computing device (252), a control action based at least in part on the determination of material accumulation between the first and second ground engaging tools (46).

13. The method (300) of claim 12, wherein analyzing the sensor data comprises comparing, with the computing device (252), the parameter to at least one threshold associated with the presence of material accumulation.

14. The method (300) of claim 12, wherein the control action comprises adjusting a downforce applied to the first and second ground engaging tools (46) or a speed of the agricultural implement (10).

15. The method (300) of claim 12, wherein the control action comprises actuating the sensing arm (204).

## Patentansprüche

1. System (250) zum Feststellen von Materialansammlungen bezüglich Bodenbearbeitungswerkzeugen (46) eines landwirtschaftlichen Arbeitsgeräts (10), wobei das System (250) ein Rahmenelement (48), das sich entlang einer ersten Richtung (58) erstreckt, und erste und zweite Bodenbearbeitungswerkzeuge (46) umfasst, die mit dem Rahmenelement (48) gekoppelt und in der ersten Richtung (58) derart voneinander beabstandet sind, dass ein freier Raum (107) zwischen den ersten und den zweiten Bodenbearbeitungswerkzeugen (46) definiert ist, wobei die ersten und die zweiten Bodenbearbeitungswerkzeuge (46) dazu eingerichtet sind, in den Erdboden in einem Feld einzugreifen, wenn das landwirtschaftliche Arbeitsgerät (10) über das Feld bewegt wird,
wobei das System (250) **gekennzeichnet ist durch**:
einen Sensorarm (204), der mit dem freien Raum (107) ausgerichtet ist, der zwischen den ersten und den zweiten Bodenbearbeitungswerkzeugen (46) definiert ist, wobei der Sensorarm (204) **durch** eine Materialansammlung zwischen den ersten und den zweiten Bodenbearbeitungswerkzeugen aus einer neutralen Position verstellbar ist, wobei der Sensorarm (204) nicht in den Boden eingreift, wenn er sich in der neutralen Position befindet;
einen Sensor (210, 212, 214), der dazu eingerichtet ist, einen Parameter zu erfassen, der das Verstellen des Sensorarms (204) angibt; und
eine Steuerung (252), die mit dem Sensor (210, 212, 214) in Kommunikationsverbindung steht, wobei die Steuerung (252) dazu eingerichtet ist, den Parameter zumindest teilweise auf Basis von Daten zu überwachen, die von dem Sensor (210, 212, 214) empfangen werden, um ein Vorhandensein einer Materialansammlung zwischen den ersten und den zweiten Bodenbearbeitungswerkzeugen (46) festzustellen.

2. System (250) nach Anspruch 1, wobei die Steuerung (252) dazu eingerichtet ist, das Vorhandensein einer Materialansammlung durch das Vergleichen des Parameters mit zumindest einem Schwellenwert, der dem Vorhandensein einer Materialansammlung zugeordnet ist, festzustellen.

3. System (250) nach Anspruch 1, wobei die Steuerung (252) weiterhin dazu eingerichtet ist, einen Steuervorgang zumindest teilweise auf Basis der Feststellung des Vorhandenseins einer Materialansammlung zu initiieren.

4. System (250) nach Anspruch 3, wobei der Steuervorgang das Einstellen einer Kraft nach unten, die auf die ersten und die zweiten Bodenbearbeitungswerkzeuge (46) aufgebracht wird, oder das Einstellen einer Geschwindigkeit des landwirtschaftlichen Arbeitsgeräts (10) umfasst.

5. System (250) nach Anspruch 3, wobei der Steuervorgang das Betätigen des Sensor-arms (204) umfasst.

6. System (250) nach Anspruch 3, wobei der Steuervorgang die Benachrichtigung einer Bedienperson des landwirtschaftlichen Arbeitsgeräts (10) über die Materialansammlung (111) zwischen den ersten und den zweiten Bodenbearbeitungswerkzeugen (46) umfasst.

7. System (250) nach Anspruch 1, wobei der Sensor als einer aus einem Beschleunigungssensor (212), einem Drehzahlsensor (210), oder einem Lastsensor (214) eingerichtet ist.

8. System (250) nach Anspruch 1, wobei der Sensor (210, 212) dazu eingerichtet ist, eine Schwenkbewegung des Sensorarms (204) zu erfassen.

9. System (250) nach Anspruch 1, wobei der Sensor (212, 214) dazu eingerichtet ist, ein Verbiegen des Sensorarms zu erfassen.

10. System (250) nach Anspruch 1, wobei jedes der ersten und der zweiten Bearbeitungswerkzeuge (46) eine erste bzw. eine zweite Scheibe umfasst.

11. System (250) nach Anspruch 1, wobei jedes der ersten und der zweiten Bearbeitungswerkzeuge (50) einen ersten bzw. einen zweiten Zinken umfasst.

12. Verfahren (300) zur Handhabung einer Materialansammlung bezüglich Bodenbearbeitungswerkzeugen (46) eines landwirtschaftlichen Arbeitsgeräts (10), wobei das landwirtschaftliche Arbeitsgerät (10) ein Rahmenelement (48), das sich entlang einer ersten Richtung (58) erstreckt, und erste und zweite Bodenbearbeitungswerkzeuge (46) umfasst, die mit dem Rahmenelement (48) gekoppelt und dazu eingerichtet sind, in den Erdboden in einem Feld einzugreifen, wenn das landwirtschaftliche Arbeitsgerät (10) über das Feld bewegt wird, wobei die ersten und die zweiten Bodenbearbeitungswerkzeuge (46) in einer ersten Richtung (58) derart voneinander beabstandet sind, dass ein freier Raum (107) zwischen den ersten und den zweiten Bearbeitungswerkzeugen (46) definiert wird, wobei das Verfahren (300) umfasst:
Empfangen, mit einer Computereinrichtung (252), von Daten von einem Sensor (210, 212, 214), der dazu eingerichtet ist, einen Parameter zu erfassen, der eine Verstellung eines Sensorarms (204) angibt, der mit dem freien Raum (107) ausgereichet ist, der zwischen den ersten und den zweiten Bodenbearbeitungswerkzeugen (46) definiert wird, wobei der Sensorarm (204) durch eine Materialansammlung zwischen den ersten und den zweiten Bodenbearbeitungswerkzeugen aus einer neutralen Position verstellbar ist, wobei der Sensorarm (204) nicht in den Boden eingreift, wenn er sich in der neutralen Position befindet;
Analysieren, mit der Computereinrichtung (252), der Sensordaten, um das Vorhandensein einer Materialansammlung zwischen den ersten und den zweiten Bodenbearbeitungswerkzeugen (46) festzustellen; und
Initiieren, mit der Computereinrichtung (252), eines Steuervorgangs zumindest teilweise auf Basis der Feststellung der Materialansammlung zwischen den ersten und den zweiten Bodenbearbeitungswerkzeugen (46).

13. Verfahren (300) nach Anspruch 12, wobei das Analysieren der Sensordaten das Vergleichen, mit einer Computereinrichtung (252), des Parameters mit zumindest einem Schwellenwert umfasst, der dem Vorhandensein einer Materialansammlung zugeordnet ist.

14. Verfahren (300) nach Anspruch 12, wobei der Steuervorgang das Einstellen einer Kraft nach unten, die auf die ersten und die zweiten Bodenbearbeitungswerkzeuge (46) aufgebracht wird, oder einer Geschwindigkeit des landwirtschaftlichen Arbeitsgeräts (10) umfasst.

15. Verfahren (300) nach Anspruch 12, wobei der Steuervorgang das Betätigen des Sensorarms (204) umfasst.

## Revendications

1. Un système (250) de détermination de l'accumulation de matières par rapport aux outils d'engagement avec le sol (46) d'un outil agricole (10), le système (250) comprenant une traverse de châssis (48) s'étendant le long d'une première direction (58) et le premier et le second outil d'engagement avec le sol (46) couplés à la traverse de châssis (48) et espacés l'un de l'autre dans la première direction (58) de sorte qu'un espace ouvert (107) est défini entre le premier et le second outil d'engagement avec le sol (46), le premier et le second outil d'engagement avec le sol (46) étant configurés pour engager le sol dans un champ lorsque l'outil agricole (10) est déplacé dans le champ,
le système (250) étant **caractérisé en ce que** :
un bras de détection (204) aligné avec l'espace ouvert (107) défini entre le premier et le second outil d'engagement avec le sol (46), le bras de détection (204) pouvant être déplacé à partir d'une position neutre par l'accumulation de matières entre le premier et le second outil d'engagement avec le sol, dans lequel le bras de détection (204) n'entre pas en contact avec le sol lorsqu'il est en position neutre ;
un capteur (210, 212, 214) configuré pour détecter un paramètre indiquant le déplacement du bras de détection (204) ; et
un contrôleur (252) couplé de manière communicative au capteur (210, 212, 214), le contrôleur (252) configuré pour surveiller le paramètre basé au moins en partie sur les données reçues du capteur (210, 212, 214) afin de déterminer une présence d'une accumulation de matières entre le premier et le second outil d'engagement avec le sol (46).

2. Le système (250) selon la revendication 1, dans lequel le contrôleur (252) est configuré pour déterminer la présence d'une accumulation de matières en comparant le paramètre à au moins un seuil associé à la présence d'une accumulation de matières.

3. Le système (250) selon la revendication 1, dans lequel le contrôleur (252) est en outre configuré pour initier une action de contrôle basée au moins en partie sur la détermination de la présence d'une accumulation de matières.

4. Le système (250) selon la revendication 3, dans lequel l'action de contrôle comprend l'ajustement d'une force d'appui appliquée au premier et au second outil d'engagement avec le sol (46) ou l'ajustement d'une vitesse de l'outil agricole (10).

5. Le système (250) selon la revendication 3, dans lequel l'action de contrôle comprend l'actionnement du bras de détection (204).

6. Le système (250) selon la revendication 3, dans lequel l'action de contrôle comprend la notification à un opérateur de l'outil agricole (10) de l'accumulation de matières (111) entre le premier et le second outil d'engagement avec le sol (46).

7. Le système (250) selon la revendication 1, dans lequel le capteur est configuré comme l'un parmi un accéléromètre (212), un capteur de rotation (210) et un capteur de charge (214).

8. Le système (250) selon la revendication 1, dans lequel le capteur (210, 212) est configuré pour détecter le pivotement du bras de détection (204).

9. Le système (250) selon la revendication 1, dans lequel le capteur (212, 214) est configuré pour détecter la flexion du bras de détection.

10. Le système (250) selon la revendication 1, dans lequel chacun parmi le premier et le second outil d'engagement avec le sol (46) comprend un premier et un second disque, respectivement.

11. Le système (250) selon la revendication 1, dans lequel chacun parmi le premier et le second outil d'engagement avec le sol (50) comprend une première et une seconde tige, respectivement.

12. Un procédé (300) de gestion de l'accumulation de matières par rapport aux outils d'engagement avec le sol (46) d'un outil agricole (10), l'outil agricole (10) comprenant une traverse de châssis (48) s'étendant le long d'une première direction (58), un premier et un second outil d'engagement avec le sol (46) couplés à la traverse de châssis (48) et configurés pour engager le sol dans un champ lorsque l'outil agricole (10) est déplacé dans le champ, le premier et le second outil d'engagement avec le sol (46) étant espacés l'un de l'autre dans la première direction (58) de sorte qu'un espace ouvert (107) est défini entre le premier et le second outil d'engagement avec le sol (46), le procédé (300) comprenant :
la réception, à l'aide d'un dispositif informatique (252), de données provenant d'un capteur (210, 212, 214) configuré pour détecter un paramètre indiquant le déplacement d'un bras de détection (204) aligné avec l'espace ouvert (107) défini entre le premier et le second outil d'engagement avec le sol (46), le bras de détection (204) pouvant être déplacé à partir d'une position neutre par l'accumulation de matières entre le premier et le second outil d'engagement avec le sol, dans lequel le bras de détection (204) n'entre pas en contact avec le sol lorsqu'il est en position neutre ;
l'analyse, à l'aide du dispositif informatique (252), des données de capteur afin de déterminer la présence d'une accumulation de matières entre le premier et le second outil d'engagement avec le sol (46) ; et
l'initiation, à l'aide du dispositif informatique (252), d'une action de contrôle basée au moins en partie sur la détermination d'une accumulation de matières entre le premier et le second outil d'engagement avec le sol (46).

13. Le procédé (300) selon la revendication 12, dans lequel l'analyse des données de capteur comprend la comparaison, à l'aide du dispositif informatique (252), du paramètre à au moins un seuil associé à la présence d'une accumulation de matières.

14. Le procédé (300) selon la revendication 12, dans lequel l'action de contrôle comprend l'ajustement d'une force d'appui appliquée au premier et au second outil d'engagement avec le sol (46) ou d'une vitesse de l'outil agricole (10).

15. Le procédé (300) selon la revendication 12, dans lequel l'action de contrôle comprend l'actionnement du bras de détection (204).
